# EUROPEAN PATENT APPLICATION

(11) **EP 4 130 100 A1**
(43) Date of publication of application: **08.02.2023**
(21) Application number: 21306079.1
(22) Date of filing: 03.08.2021
(51) Int. Cl.: C08G 75/02, C08G 73/10, C08G 75/0231, C08L 81/02, B29C 45/00, B32B 9/00

(54) **AMINE-TERMINATED POLY(ARYLENE SULFIDE) (CO)POLYMER AND ITS MANUFACTURING METHOD**

(71) Applicant: Solvay Specialty Polymers USA, LLC., Alpharetta, GA 30005-3914 (US)
(72) Inventor: NIELSEN, Matthew, Alpharetta, GA 30009 (US); JEOL, Stéphane, 69230 Saint-Genis-Laval France (FR)
(74) Representative: Banfi, Gaia

(57) **Abstract**

The present invention relates to a process for manufacturing a poly(arylene sulfide) (PAS) (co)polymer containing at least one amine as one terminal group in a single step; to a PAS (co)polymer produced by the process; to a polymer composition comprising the PAS (co)polymer containing at least one amine as one terminal group and at least one reinforcing filler; and to an article, part or composite material comprising the PAS (co)polymer or the polymer composition. This present invention also relates to use of the PAS (co)polymer or the polymer composition in oil and gas applications, automotive aplications, electric and electronic applications, or aerospace and consumer goods as a heat and chemical resistant coating.

## Description

### TECHNICAL FIELD

The present invention relates to a process for manufacturing a poly(arylene sulfide) (PAS) (co)polymer containing at least one amine as one terminal group in a single step; to a PAS (co)polymer produced by the process; to a polymer composition comprising the PAS (co)polymer containing at least one amine as one terminal group and at least one reinforcing filler; and to an article, part or composite material comprising the PAS (co)polymer or the polymer composition. This present invention also relates to use of the PAS (co)polymer or the polymer composition in oil and gas applications, automotive aplications, electric and electronic applications, or aerospace and consumer goods as a heat and chemical resistant coating.

### BACKGROUND OF THE INVENTION

Poly(arylene sulfide) (PAS), including polyphenylene sufide (PPS), is a well known polymer having excellent properties suitable for engineering plastics, for instance thermal resistance, chemical resistance, electrical insultation, moldability, and mechanical properties. PAS polymers also have a relatively low glass transition temperature (T_{g}), typically below 100°C, which limits their use in some applications, e.g., thermoplastic composites, and low toughness (impact strength).

PPS, a typical PAS, is a crystalline polymer having T_{g} of from 85°C to 100°C and a melting temperature (Tₘ) of from 275°C to 290°C. PPS polymer is often formed by reaction of sodium sulfide (Na₂S) (or sodium hydrosulfide (NaSH)) with *p*-dichlorobenzene in a polar solvent. N-methyl-2-pyrrolidone (NMP) is often used as the polar solvent thanks to its stability at high temperatures required for this synthesis and its solubility of the sulfiding agent and the oligomeric intermediates. Several other routes to synthesize PPS have been also reported, including the oxidative coupling of diphenyl disulphide (or thiophenol) with a vanadium catalyst, and the melt condensation of *p*-iodobenzene with sulphur. The latter, which forms a product with some disulphide units in the polymer backbone, can be processed to a prepolymer, and subsequently further polymerization can be effected in the solid state. In parallel, various methods have been also developed for the synthesis of aliphatic polysulfides.

In the meantime, it is well known that a PAS polymer containing at least one amine as one terminal group can form covalent bonds to glass fibers, carbon fibers, and silane linkers, increasing the strength of the resulting compound and reducing the pull-out of fibers in compounds and thermoplastic composites. Accordingly, a PAS polymer containing at least one amine as one terminal group is often used to form block copolymers with epoxy resins, polysilanes, polyamides, aramids, polyesters, polyetherimides, polyamideimides and any other resins containing anhydride, carboxylate, or epoxy groups as their terminal or pendant groups. These block copolymers are useful in various applications thanks to their better ductility and fatigue resistance, while maintaining the high chemical and thermal resistance. Traditional methods of introducing amine content into a PAS copolymer involve copolymerization with dichloroaniline, e.g., 3,5-dichloroaniline.

Notably, WO 2019/151288 (Toray Industries, Inc.) discloses a method of producing an amine-terminated PAS polymer, which involves two steps, i.e., (i) synthesis of a PAS prepolymer and (ii) trans-thioetherification of the PAS prepolymer in a molten state with 4,4'-thiodianiline. In consequence, WO'288 succeeded to provide a PAS copolymer with high physical stability at high temperatures, excellent moldability and chemical resistance. However, this method has several drawbacks. First, the second step in a molten state requires additional reaction vessels in addition to the typical polymerization reactor. As described in its Reference Example 4 of WO'288, 80 g of PPS prepolymer is placed in a glass test tube with 20 g of 4,4'-thiodianiline and heated to 340°C, while stirring under vacuum, to produce an amine-terminated polymer with a Mₙ of 2,400 g/mol. WO'288 also demonstrates in its Example 4 that this polymer can be mixed with pyromellitic dianhydride to form a PPS block copolymer with a M_{w} of 32,000 g/mol. Although WO'288 doesn't describe it specifically, this procedure is likely to encounter a significant engineering challenge and and hence to necessitate big investment in terms of capital expenditures, in addition to the relatively high cost of 4,4'-thioaniline. Also, it will be difficult to reproduce the reactions under melt phase, because any change of the reaction conditions, e.g., temperature, duration, etc. would result in a different polymer with different M_{w} and/or different incorporation level of the particular end groups to the polymer.

Accordingly, there exists a continuous need in this field for a new process which can produce an amine-terminated PAS in a more reproducible and cost-effective manner

### SUMMARY OF THE INVENTION

A first object of the present invention is a process for manufacturing a PAS (co)polymer containing at least one amine as one terminal group by mixing (i) at least one dihalogenated aromatic compound, (ii) at least one alkali metal (hydro)sulfide, and (iii) a chain terminator that contains an aromatic thiol with an aniline group, or that forms an aromatic thiol with an aniline group under polymerization,
wherein the PAS (co)polymer comprises at least one arylene sulfide as recurring units p, q and r represented by the following formulae (I), (II) and (III) respectively: 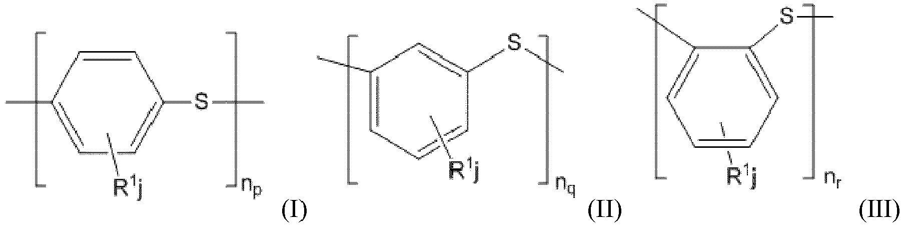
wherein nₚ, n_{q} and nᵣ are the mole % of each recurring unit p, q and r, respectively;
the recurring units p, q and r are arranged in blocks, in alternation or randomly;
1% ≤ (n_{q} + nᵣ)/(nₚ + n_{q} + nᵣ) ≤ 12%;
n_{q} ≥ 0% and nᵣ ≥ 0%;
j is zero or an integer between 1 and 4; and R¹ is selected from the group consisting of halogen atoms, C₁-C₁₂ alkyl groups, C₇-C₂₄ alkylaryl groups, C₇-C₂₄ aralkyl groups, C₆-C₂₄ arylene groups, C₁-C₁₂ alkoxy groups and C₆-C₁₈ aryloxy groups.

A second object of the present invention is a PAS (co)polymer containing at least one amine as one terminal group, produced by the process.

A third object of the present invention is a polymer composition comprising the PAS (co)polymer containing at least one amine as one terminal group and at least one reinforcing filler comprising glass fibers, carbon fibers and silane compounds.

A fourth object of the present invention is an article, part or composite material comprising the PAS (co)polymer or the polymer composition as described above.

A fifth object of the present invention is use of the article, part or composite material comprising the PAS (co)polymer or the polymer composition as described above in oil and gas applications, automotive applications, electric and electronic applications, or aerospace and consumer goods as a heat and chemical resistant coating.

It was surprisingly found by the inventors that the above-mentioned drawbacks in the conventional process of the prior art can be solved by a new process for manufacturing a PAS (co)polymer containing at least one amine as one terminal group in a single step, which is operationally much easier than the conventional process of the prior art, e.g., melt-mixing process, which requires solution phase synthesis and subsequent steps such as solvent removal, coagulation and purification. In addition, the inventors also found that the presence of amine group(s) in the PAS (co)polymer as produced can be easily evidenced through a reactive extrusion of the PAS (co)polymer with (iv) an aromatic compound containing acid dianhydride group.

### DETAILED DESCRIPTION OF THE INVENTION

### DEFINITIONS

Throughout this specification, unless the context requires otherwise, the word "comprise" or "include", or variations such as "comprises", "comprising", "includes", including" will be understood to imply the inclusion of a stated element or method step or group of elements or method steps, but not the exclusion of any other element or method step or group of elements or method steps. According to preferred embodiments, the word "comprise" and "include", and their variations mean "consist exclusively of'.

As used in this specification, the singular forms "a", "an" and "the" include plural aspects unless the context clearly dictates otherwise. The term "and/or" includes the meanings "and", "or" and also all the other possible combinations of the elements connected to this term.

The term "between" should be understood as being inclusive of the limits.

The term "aliphatic group" includes organic moieties characterized by straight or branched-chains, typically having between 1 and 18 carbon atoms. In complex structures, the chains may be branched, bridged, or cross-linked. Aliphatic groups include alkyl groups, alkenyl groups, and alkynyl groups.

As used herein, the terminology "(Cₙ-Cₘ)" in reference to an organic group, wherein n and m are integers, respectively, indicates that the group may contain from n carbon atoms to m carbon atoms per group.

In the present application, any description, even though described in relation to a specific embodiment, is applicable to and interchangeable with other embodiments of the present disclosure. Furthermore, where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list. Additionally, any recitation herein of numerical ranges by endpoints includes all numbers subsumed within the recited ranges as well as the endpoints of the range and equivalents.

Unless specifically limited otherwise, the term "alkyl", as well as derivative terms such as "alkoxy", "acyl" and "alkylthio", as used herein, include within their scope straight chain, branched chain and cyclic moieties. Examples of alkyl groups are methyl, ethyl, 1-methylethyl, propyl, 1,1-dimethylethyl, and cyclo-propyl. Unless specifically stated otherwise, each alkyl and aryl group may be unsubstituted or substituted with one or more substituents selected from but not limited to halogen, hydroxy, sulfo, C₁-C₆ alkoxy, C₁-C₆ alkylthio, C₁-C₆ acyl, formyl, cyano, C₆-C₁₅ aryloxy or C₆-C₁₅ aryl, provided that the substituents are sterically compatible and the rules of chemical bonding and strain energy are satisfied. The term "halogen" or "halo" includes fluorine, chlorine, bromine and iodine, with fluorine being preferred.

The term "aryl" refers to a phenyl, indanyl or naphthyl group. The aryl group may comprise one or more alkyl groups, and are called sometimes in this case "alkylaryl"; for example may be composed of an aromatic group and two C₁-C₆ groups (e.g. methyl or ethyl). The aryl group may also comprise one or more heteroatoms, e.g. N, O or S, and are called sometimes in this case "heteroaryl" group; these heteroaromatic rings may be fused to other aromatic systems. Such heteroaromatic rings include, but are not limited to furanyl, thienyl, pyrrolyl, pyrazolyl, imidazolyl, triazolyl, isoxazolyl, oxazolyl, thiazolyl, isothiazolyl, pyridyl, pyridazyl, pyrimidyl, pyrazinyl and triazinyl ring structures. The aryl or heteroaryl substituents may be unsubstituted or substituted with one or more substituents selected from but not limited to halogen, hydroxy, C₁-C₆ alkoxy, sulfo, C₁-C₆ alkylthio, C₁-C₆ acyl, formyl, cyano, C₆-C₁₅ aryloxy or C₆-C₁₅ aryl, provided that the substituents are sterically compatible and the rules of chemical bonding and strain energy are satisfied.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a temperature range of about 120°C to about 150°C should be interpreted to include not only the explicitly recited limits of about 120°C to about 150°C, but also to include sub-ranges, such as 125°C to 145°C, 130°C to 150°C, and so forth, as well as individual amounts, including fractional amounts, within the specified ranges, such as 122.2°C, 140.6°C, and 141.3°C, for example.

Unless otherwise specified, in the context of the present invention the amount of a component in a composition is indicated as the ratio between the volume of the component and the total volume of the composition multiplied by 100, i.e., % by volume (vol%) or as the ratio between the weight of the component and the total weight of the composition multiplied by 100, i.e., % by weight (wt%). It is to be understood that both the foregoing general description and the following detailed description are exemplary and are intended to provide further explanation of the invention as claimed. Accordingly, various changes and modifications described herein will be apparent to those skilled in the art. Moreover, descriptions of well-known functions and constructions may be omitted for clarity and conciseness.

A first object of the present invention relates to a process for manufacturing a poly(arylene sulfide) (PAS) (co)polymer containing at least one amine as one terminal group by mixing (i) at least one dihalogenated aromatic compound, (ii) at least one alkali metal (hydro)sulfide, and (iii) a chain terminator that contains an aromatic thiol with an aniline group, or that forms an aromatic thiol with an aniline group under polymerization,
wherein the PAS (co)polymer comprises at least one arylene sulfide as recurring units p, q and r represented by the following formulae (I), (II) and (III) respectively: 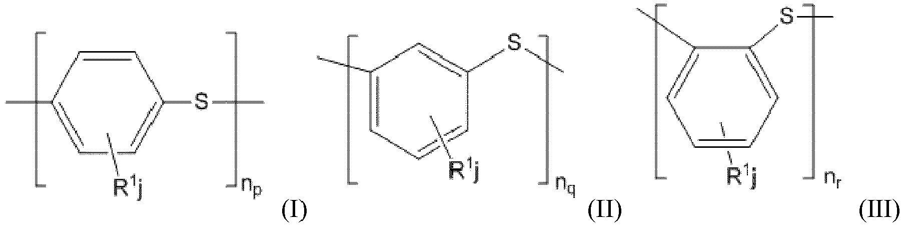
wherein nₚ, n_{q} and nᵣ are the mole % of each recurring unit p, q and r, respectively;
the recurring units p, q and r are arranged in blocks, in alternation or randomly;
1% ≤ (n_{q} + nᵣ)/(nₚ + n_{q} + nᵣ) ≤ 12%;
n_{q} ≥ 0% and nᵣ ≥ 0%;
j is zero or an integer between 1 and 4; and
R¹ is selected from the group consisting of halogen atoms, C₁-C₁₂ alkyl groups, C₇-C₂₄ alkylaryl groups, C₇-C₂₄ aralkyl groups, C₆-C₂₄ arylene groups, C₁-C₁₂ alkoxy groups and C₆-C₁₈ aryloxy groups.

In one embodiment, (i) the dihalogenated aromatic compound comprises dihalogenated benzenes and dihalogenated aromatic compounds having a substituent other than halogen.

In a preferrred embodiment, the dihalogenated benzenes comprise p-dichlorobenzene, o-dichlorobenzene, m-dichlorobenzene, p-dibromobenzene, o-dibromobenzene, m-dibromobenzene, 1-bromo-4-chlorobenzne, 1-bromo-3-chlorobenzene, 1-bromo-2-chlorobenzene, and mixtures thereof.

In another preferrred embodiment, the dihalogenated aromatic compounds having a substituent other than halogen comprise 1-methoxy-2,5-dichlorobenzene, 1-methyl-2,5-dichlorobenzene, 1,4-dimethyl-2,5-dichlorobenzene, 1,3-dimethyl-2,5-dichlorobenzene, 2,5-dichlorobenzoic acid, 3,5-dichlorobenzoic acid, 2,5-dichloroaniline, 3,5-dichloroaniline, and mixtures thereof.

In one embodiment, (ii) the alkali metal (hydro)sulfide comprises lithium hydrosulfide, sodium hydrosulfide, potassium hydrosulfide, lithium sulfide, sodium sulfide, potassium sulfide, rubideum sulfide, cecium sulfide, and mixtures thereof.

In a preferrred embodiment, (ii) the alkali metal (hydro)sulfide is sodium hydrosulfide.

In the present invention, (iv) the chain terminator contains an aromatic thiol with an aniline group, or forms an aromatic thiol with an aniline group under polymerization.

In one embodiment, (iv) the chain terminator comprises 4-aminothiophenol, 3-aminothiophenol, 2-aminothiophenol.

In another embodiment, (iv) the chain terminator consists of a compound that can form an aminothiophenol *in situ* including 1-chloro-3-nitrobenzene, 1-chloro-2-nitrobenzene, 1-chloro-4-nitrobenzene, 4-nitrothiophenol, 4-acetamidothiophenol, and mixtures thereof.

In a preferred embodiment, (iv) the chain terminator is 4-aminothiophenol.

In one embodiment, the process for manufacturing a poly(arylene sulfide) (PAS) (co)polymer containing at least one amine as one terminal group comprises an additional step of extruding or reacting the PAS (co)polymer with (iv) an aromatic compound that comprises a pyromellitic dianhydride or that is represented by the following formula (IV) 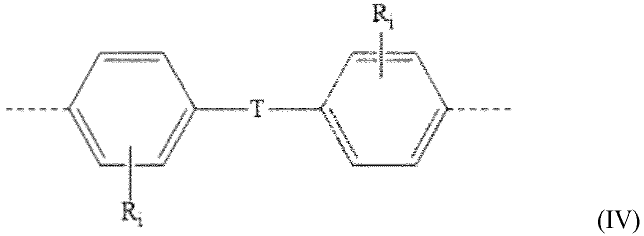 wherein T is selected from the group consisting of a bond, -C(O)-, -SO₂-, -O-, - C(CH₃)₂-, phenyl and -CH₂-; and Rᵢ is an acid anhydride group.

In a preferred embodiment, (iv) the aromatic compound comprises pyromellitic dianhydride, 3,3',4,4'-benzophenonetetracarboxylic dianhydride (BTDA), 3,3',4,4'-biphenyltetracarboxylic dianhydride (BPDA), 3,3',4,4'-diphenylsulfonetetracarboxylic dianhydride, and 4,4'-oxydiphthalic dianhydride.

In a more preferred embodiment, (iv) the aromatic compound comprises pyromellitic dianhydride, 3,3',4,4'-benzophenonetetracarboxylic dianhydride (BTDA), and 3,3',4,4'-biphenyltetracarboxylic dianhydride (BPDA).

In another embodiment, the process for manufacturing a PAS (co)polymer containing at least one amine as one terminal group comprises an additional step of extruding or reacting the PAS (co)polymer with another polymer resin bearing reactive functional groups such as an epoxy, a polyamide, a polyester, a polyimide, a polyamideimide, or a polyetherimide.

In the present invention, the polymerization reaction takes place in a single step involving reacting in a reaction mixture (i) the dihalogenated aromatic compound, (ii) the alkali metal (hydro)sulfide, and (iii) the chain terminator.

The polymerization solvent is selected such that it is a solvent for reaction components at the reaction temperature. In some embodiments, the polymerization solvent is a polar aprotic solvent. Examples of desirable polar aprotic solvents include, but are not limited to, hexamethylphosphoramide, tetramethylurea, n,n-ethylenedipyrrolidone, n-methyl-2-pyrrolidone ("NMP"), pyrrolidone, caprolactam, n-ethylcaprolactam, sulfolane, diphenylsulfone, n,n'-dimethylacetamide, and 1,3-dimethyl-2-imidazolidinone. Preferably, the polymerization solvent is NMP

After the polymerization reaction is terminated, the PAS polymer is present as a PAS polymer mixture including water, the polymerization solvent, reaction by-products including salts, PAS oligomers, and any unreacted reaction components (collectively, "post-reaction compounds"). Generally, after termination, the PAS polymer mixture is present as a slurry, having a liquid phase and a solid phase containing the PAS polymer. In some embodiments, the PAS polymer mixture can be present as wet PAS polymer, for example, by filtration of the slurry after termination. PAS polymer synthesis, including polymerization and termination, and the recovery, including water treatment, acid treatment and metal cation treatment, is discussed in US patent application publication number, 2015/0175748 to Fodor et al., filed December 19, 2013 ("the '748 patent") and incorporated by reference herein in its entirety.

In one embodiment, subsequent to termination, the process for manufacturing a PAS (co)polymer containing at least one amine as one terminal group further comprises an additional recovery step by doing one or more washes, where each wash includes contacting the PAS polymer formed during polymerization with a liquid. The liquid of each wash is independently selected from water, aqueous acid, and an aqueous metal cation solution. The acid can be any organic acid or inorganic acid which is water soluble under the conditions of the acid treatment. In a particular embodiment, the organic acid which can be utilized in the acid treatment step comprises a C₁-C₁₅ carboxylic acid. Non-limiting examples of the organic acid comprise acetic acid, formic acid, oxalic acid, fumaric acid, etc. Examples of post-reaction recovery processes are discussed in the above '748 patent. Based upon the disclosure herein, the person of ordinary skill in the art will know how to select a recovery process to obtain the PAS (co)polymer described herein.

A second object of the invention is a PAS (co)polymer containing at least one amine as one terminal group produced by a process according to the present invention.

In one embodiment, the PAS (co)polymer contains two amines as both terminal groups.

In another embodiment, the PAS (co)polymer contains an amine as one terminal group and the other endgroup different from amine as the other terminal group. In a preferred embodiment, the other endgroup different from amine is selected from the group consisting of chlorine, phenol, phenolate salt, alkylamine, and unsubstituted phenyl endgroups that may be typically found in the PAS (co)polymer.

A third object of the invention is a polymer composition comprising the PAS (co)polymer containing at least one amine as one terminal group according to the present invention and at least one reinforcing filler.

In some embodiments, the reinforcing filler can be selected from fibrous and particulate reinforcing agent. In the present invention, a fibrous reinforcing filler is considered to be a material having length, width and thickness, wherein the average length is significantly larger than both the width and thickness. Generally, such a material has an aspect ratio, defined as the average ratio between the length and the largest of the width and thickness of at least 5, at least 10, at least 20 or at least 50. In some embodiments, the reinforcing fibers (e.g. glass fibers or carbon fibers) have an average length of from 3 mm to 50 mm. In some such embodiments, the reinforcing fibers have an average length of from 3 mm to 10 mm, from 3 mm to 8 mm, from 3 mm to 6 mm, or from 3 mm to 5 mm. In alternative embodiments, the reinforcing fibers have an average length of from 10 mm to 50 mm, from 10 mm to 45 mm, from 10 mm to 35 mm, from 10 mm to 30 mm, from 10 mm to 25 mm or from 15 mm to 25 mm. The average length of the reinforcing fibers can be taken as the average length of the reinforcing fibers prior to incorporation into the polymer composition or can be taken as the average length of the reinforcing fiber in the polymer composition. In the case of glass fibers, they can be round (circular cross section) or flat (non-circular cross-section including, but not limited to, oval, elliptical or rectangular).

The reinforcing filler may be selected from mineral fillers (such as talc, mica, kaolin, calcium carbonate, calcium silicate, magnesium carbonate), and fibrous fillers (such as glass fibers, carbon fibers, synthetic polymeric fibers, aramid fibers, aluminum fibers, titanium fibers, magnesium fibers, boron carbide fibers, rock wool fibers, steel fibers).

Among fibrous fillers, carbon fibers and glass fibers are preferred. In particular, the glass fibers include chopped strand A-, E-, C-, D-, S- and R-glass fibers, as described in chapter 5.2.3, p. 43-48 of Additives for Plastics Handbook, 2nd edition, John Murphy.

In a preferred embodiment, a reinforcing filler comprises glass fibers, carbon fibers and silane compounds.

In another preferred embodiment, a reinforcing fiber is able to withstand the high temperature applications.

In some embodiments, the concentration of the reinforcing filler in the polymer composition is at least 5 wt%, at least 10 wt%, at least 15 wt%, or at least 20 wt%. In some embodiments, the concentration of the reinforcing filler in the polymer composition is no more than 70 wt%, no more than 65 wt% or no more than 60 wt%. In some embodiments, the concentration of the reinforcing filler in the polymer composition is from 5 wt% to 70 wt%, from 10 wt% to 70 wt%, from 10 wt% to 65 wt%, from 10 wt% to 60 wt%, from 15 wt% to 60 wt%, or from 20 wt% to 60 wt%.

In another embodiment, the polymer composition according to the present invention further comprises tougheners, plasticizers, colorants, pigments, antistatic agents, dyes, lubricants, thermal stabilizers, light stabilizers, flame retardant (including, but not limited to, halogen-free flame retardants), nucleating agents and antioxidants.

In some embodiments, the concentration of the PAS (co)polymer in the polymer composition is at least 20 wt%, at least 40 wt%, or at least 50 wt%. In some embodiments, the concentration of the PAS (co)polymer in the polymer composition is no more than 99.95 wt%, no more than 99 wt%, no more than 95 wt%, no more than 90 wt%, no more than 85 wt%, no more than 80 wt%, no more than 70 wt% or no more than 60 wt%. In some embodiments, the concentration of the PAS (co)polymer in the polymer composition is from 20 wt% to 99.95 wt%, from 20 wt% to 95 wt%, from 20 wt% to 85 wt%, from 20 wt% to 80 wt%, from 20 wt% to 70 wt%, or from 20 wt% to 60 wt%. As used herein, the concentration of a component in the polymer composition is relative to the total weight of the polymer composition, unless explicitly stated otherwise.

In the present invention, the PAS (co)polymer can be desirably incorporated into polymer blends, in which the polymer composition includes the PAS (co)polymer and an additional polymer as described below. The terminal amine of the PAS (co)polymer can react with a wide variety of functional groups including, but not limited to, a carboxylic acid, a carboxylate, an anhydride, an epoxide, a urethane, an amide, a ketone, an isocyanate, a urea, a halogen, an activated ether, an ester, and an acid chloride. In some embodiments, the polymer composition can include the PAS (co)polymer and an additional polymer containing functional group selected from the group consisting of carboxylic acids, carboxylates, anhydrides, epoxides, urethanes, amides, ketones, isocyanates, urea, halogens, activated ethers, esters, and an acid chlorides. The functional group can be present at the chain ends of the polymer or on the backbone of the polymer (i.e., in recurring units not terminating the polymer chain). In some embodiments, the additional polymer is a thermoplastic polymer. In some such embodiments, the additional polymer is selected from the group consisting of a poly(arylethersulfone), a polyamide, a polyamideimide, a liquid crystal polymer, a polyimide, a polyetherimide, a poly(aryletherketone), a polyurethane, a polyesters, and a polycarbonate. In some embodiments, the additional polymer is a thermoset polymer or thermoset precursor. In some such embodiments, the additional polymer is selected from the group consisting of an epoxy resin, an epoxy novolac resin, a benzoxazine, a bismaleimide, a polyacid amic solutions, a polyester thermosetting resin, a vinyl ester, a cyanate ester, and a urea-formaldehyde resin. Of course, in some embodiments, the polymer composition can include a plurality of additional polymers as described above, which can be all thermoplastic polymers, all thermoset polymers, or a mixture thereof.

In the present invention, the polymer composition can be made using methods well known in the art. In one embodiment, the polymer composition can be made by melt-blending the PAS (co)polymer and additional components, including a reinforcing filler, a flame retardant, a light stabilizer, and any other components.

Any melt-blending method may be used for mixing polymeric ingredients and non-polymeric ingredients in the context of the present invention. For example, polymeric ingredients and non-polymeric ingredients may be fed into a melt mixer, such as single screw extruder or twin screw extruder, agitator, single screw or twin screw kneader, or Banbury mixer. If a reinforcing filler presents a long physical shape (i.e., a glass fiber having high aspect ratio), drawing extrusion molding may be used to prepare a reinforced composition.

When the polymer composition contains a thermoset polymer or thermoset precursor, as described above, the PAS (co)polymer, in the form of powder (characterized by a D50 from 1 micron to 500 microns, preferably from 2 microns to 200 microns, and most preferably from 5 microns to 100 micron), can be blended with the thermoset polymer or thermoset precursor, along with any other additives using any equipment known in the prior art to disperse additives in thermoset precursors.

A fourth object of the invention is an article, part or composite material comprising the PAS (co)polymer or the polymer composition according to the present invention.

The PAS (co)polymer and polymer composition can be desirably incorporated into an article, part or composite material. The article, part or composite material can notably be used in mobile electronics, LED packaging, oil and gas components, food contact components (including, but not limited to, food film and casing), electrical and electronic components (including, but not limited to, power unit components for computing, data-system and office equipment and surface mounted technology compatible connectors and contacts), medical device components, construction components (including, but not limited to, pipes, connectors, manifolds and valves, for cooling and heating systems; boiler and meter components; gas systems pipes and fittings; and electrical protection devices for mini-circuit breakers, contactors, switches and sockets), industrial components, plumbing components (including, but not limited to, pipes, valves, fittings, manifolds, shower taps and shower valves), automotive components, and aerospace components (including, but not limited to, interior cabin components).

The article, part or composite material can be, for example, a mobile electronic device component. As used herein, a "mobile electronic device" refers to an electronic device that is intended to be conveniently transported and used in various locations. A mobile electronic device can include, but is not limited to, a mobile phone, a personal digital assistant ("PDA"), a laptop computer, a tablet computer, a wearable computing device (e.g., a smart watch, smart glasses and the like), a camera, a portable audio player, a portable radio, global position system receivers, and portable game consoles. The mobile electronic device component may include, for example, a radio antenna and the composition. In this case, the radio antenna can be a WiFi antenna or an RFID antenna. The mobile electronic device component may also be an antenna housing.

In some embodiments, the mobile electronic device component is an antenna housing. In some such embodiments, at least a portion of the radio antenna is disposed on the polymer composition. Additionally or alternatively, at least a portion of the radio antenna can be displaced from the polymer composition. In some embodiments, the device component can be of a mounting component with mounting holes or other fastening device, including but not limited to, a snap fit connector between itself and another component of the mobile electronic device, including but not limited to, a circuit board, a microphone, a speaker, a display, a battery, a cover, a housing, an electrical or electronic connector, a hinge, a radio antenna, a switch, or a switchpad. In some embodiments, the mobile electronic device can be at least a portion of an input device.

Examples of electric and electronics devices include, but are not limited to, connectors, contactors, switches, flexible and non-flexible printed circuit boards.

Examples of oil and gas components include, but are not limited to, drill liners, compressor rings, poppets, back-up seal rings, electrical connectors, labyrinth seals, motor end plates, bearings, bushings, suck rod guides and down hole tubing.

Examples of automotive components include, but are not limited to, components in thermal management systems (including, but not limited to, thermostat housings, water inlet/outlet valves, water pumps, water pump impellers, and heater cores and end caps), air management system components (including, but not limited to, turbocharger actuators, turbocharger by-pass valves, turbocharger hoses, EGR valves, CAC housings, exhaust gas recirculation systems, electronic controlled throttle valves, and hot air ducts), transmission components and launch device components (including, but not limited to, dual clutch transmissions, automated manual transmissions, continuously variable transmissions, automatic transmissions, torque convertors, dual mass flywheels, power takeoffs, clutch cylinders, seal rings, thrust washers, thrust bearings, needle bearings, and check balls), automotive electronic components, automotive lighting components (including, but not limited to, motor end caps, sensors, ECU housings, bobbins and solenoids, connectors, circuit protection/relays, actuator housings, Li-ion battery systems, and fuse boxes), traction motor and power electronic components (including, but not limited to, battery packs), fuel and selective catalytic reduction ("SCR") systems (including, but not limited to, SCR module housings and connectors, SCR module housings and connectors, fuel flanges, rollover valves, quick connects, filter housings, fuel rails, fuel delivery modules, fuel hoses, fuel pumps, fuel injector o-rings, and fuel hoses), fluid system components (e.g. fuels system components) (including, but not limited to inlet and outlet valves and fluid pump components), interior components (e.g. dashboard components, display components, and seating components), and structural and lightweighting components (e.g. gears and bearings, sunroofs, brackets and mounts, electrical battery housings, thermal management components, braking system elements, and pump and EGR systems).

The article can be molded from the PAS (co)polymer or polymer composition by any process, e.g. extrusion, injection molding, blow molding, rotomolding or compression molding.

The article can be printed from the PAS (co)polymer or polymer composition by a process comprising a step of extrusion of the material, which is for example in the form of a filament, or comprising a step of laser sintering of the material, which is in this case in the form of a powder.

In some embodiments, the PAS (co)polymer or polymer composition can be desirably incorporated into three-dimensional ("3D") printing applications. One application is directed to a method for manufacturing a 3D object with an additive manufacturing system, comprising providing a part material comprising the PAS (co)polymer or polymer composition (PC) the present invention, and printing layers of the 3D object from the part material.

The PAS (co)polymer or polymer composition can therefore be in the form of a thread or a filament to be used in a process of 3D printing, e.g., Fused Filament Fabrication, also known as Fused Deposition Modelling ("FDM").

The PAS (co)polymer or polymer composition can also be in the form of a powder, for example a substantially spherical powder, to be used in a process of 3D printing, e.g. Selective Laser Sintering (SLS).

The PAS (co)polymer or polymer composition can be incorporated into a composite material. A composite material includes continuous reinforcing fillers imbedded in a thermoplastic matrix. In some embodiments, the continuous reinforcing fillers are selected from glass fibers, carbon fibers, aluminum fibers, titanium fibers, magnesium fibers, boron carbide fibers, rock wool fibers, steel fibers, aramid fibers, natural fibers (e.g. cotton, linen and wood) and any combinations thereof. Preferably, the continuous reinforcing fiber is glass fiber or carbon fiber. As used herein, continuous reinforcing fillers are the ones with an average length in the longest dimension of at least 5 millimeters ("mm"), at least 10 mm, at least 25 mm or at least 50 mm. The thermoplastic matrix includes the PAS (co)polymer or polymer composition. The composite material can be a unidirectional composite material (e.g., a tape) or a multidirectional composite material (e.g., a woven fabric, a mat, or a layered fabric).

The present invention also relates to use of the PAS polymers or polymer composition in oil and gas applications, automotive applications, electric and electronic applications, or aerospace and consumer goods as a heat and chemical resistant coating.

Should the disclosure of any patents, patent applications, and publications which are incorporated herein by reference conflict with the description of the present application to the extent that it may render a term unclear, the present description shall take precedence.

The invention will be now explained in more detail with reference to the following examples, whose purpose is merely illustrative and not intended to limit the scope of the invention.

### EXAMPLES

### RAW MATERIALS

1-methyl-2-pyrollidone (NMP) (> 99.0%): commercially available from TCI sodium hydrosulfide (NaSH) (55 - 60%): commercially available from AkzoNobel 1,4-dichlorobenzene (DCB) (≥ 99%): commercially available from Alfa Aesar sodium hydroxide (≥ 97.0%): commercially available from Fisher Chemical sodium acetate (≥ 99%): commercially available from VWR Chemicals 4-aminothiophenol (4-ATP) (≥ 98%): commercially available from TCI 1-chloro-4-nitrobenzene (1,4-CNB) (≥ 98%): commercially available from TCI 3,3',4,4'-biphenyltetracarboxylic dianhydride (BPDA) (97%): commercially available from Sigma

### TESTING METHODS

Thermal Performance: T_{g} and Tₘ were determined using differential scanning Calorimetry ("DSC"), according to ASTM D3418 employing a heating and cooling rate of 20 °C/min. That is, DSC data was obtained from amorphous film samples by heating to 350 °C, holding for 5 minutes, cooling to 30 °C, and heating to 350 °C again, all at 20 °C per minute. Three scans were used for each DSC test: a first heat up to 350°C, followed by a first cool down to 30°C, followed by a second heat up to 350°C. T_{g} and Tₘ were determined from the second heat.

Molecular Weight (M_{w}): M_{w} was determined by gel permeation chromatography (GPC) at 210°C using a PL220 high temperature GPC with a 1-chlorohaphtalene mobile phase and polystyrene standards.

Melt Index: 1270ER was used among three melt index type measurements, i.e., Extrusion Rate (ER), 1270ER and Melt Flow (MF), measured by modifying various conditions of ASTM D1238-86, Procedure B-Automatically Timed Flow Rate Procedure, Condition 316/5.0. The orifice size was modified to 1.25 inch in length and using a total drive weight, including the piston, of 1270 grams. The temperature used was 316°C and 5 minute pre-heat time was used prior to the measurement. The values for 1270ER were expressed as grams per ten minutes (g · (10 min)⁻¹).

### SYNTHESIS OF PAS (CO)POLYMERS and PAS BLOCK (CO)POLYMERS

### Inventive Example 1: (with 1 mol% of 4-ATP)

PAS (co)polymer synthesis: A 1-L autoclave reactor was charged with 43.51 g sodium hydroxide (1.088 mol), 28.59 g sodium acetate (0.349 mol), 103.18 g NaSH (57.39 wt%, 1.056 mol), and 313 g NMP. The reactor was purged and pressurized to 10 psig with nitrogen and set to stir continuously at 400 rpm. A separate addition vessel was charged with 156.04 g DCB (1.062 mol), 1.32 g 4-ATP (0.011 mol), and 50 g NMP. The addition vessel was purged and pressurized to 90 psig with nitrogen, and heated to 100 °C. The reactor was heated from room temperature at 1.5 °C/min. Upon reaching 150 °C, the reactor was vented through a condenser and about 50 mL of a clear condensate was collected under a small stream of nitrogen (60 mL/min) until the reactor reached 200 °C. At this point, the condenser was removed, the nitrogen flow was stopped, and the DCB/4-ATP/NMP mixture in the addition vessel was promptly added to the reactor. The addition vessel was charged with an additional 30 g NMP, purged and pressurized to 90 psig with nitrogen, and the contents were immediately added to the reactor. The sealed reactor continued heating to 240 °C and was then held at 240 °C for 2 hours, heated to 265 °C at 1.5 °C/min, held at 265 °C for 2 hours, cooled to 200 °C at 1.0 °C/min, and finally allowed to cool to room temperature. The resulting slurry was diluted with 200 mL NMP, removed from the reactor, heated to 80 °C, and filtered through a medium porosity sintered glass filter. The filter cake was washed once with 100 mL warm NMP (60 °C). The solids were stirred for 15 minutes in 300 mL heated DI water (70 °C) and subjected to filtration on the medium porosity glass filter, a process that was repeated five times in total. The rinsed solids were dried in a vacuum oven overnight at 100 °C under nitrogen, affording 107.12 g of a white powdery resin having a 1270ER = 72.6 g · (10 min)⁻¹ and an M_{w} of a 31,400 g/mol. Tm = 285 °C. Tg = 100 °C.

PAS block (co)polymer synthesis: In a DSM Xplore 15 cc twin-screw microcompounder, 12 g of the PAS (co)polymer was mixed with 209 mg BPDA for 10 minutes with a screw speed of 100 rpm and a barrel temperature of 335 °C. The resulting yellow-brown extrudate had a 1270ER of 33.3 g · (10 min)⁻¹ and an M_{w} of 37,300 g/mol. Tm = 279 °C. Tg = 87 °C.

### Inventive Example 2: (with 2 mol% of 4-ATP)

PAS (co)polymer synthesis: It was synthesized according to the same procedure from Inventive Example 1 with 36.36 g sodium hydroxide (0.909 mol), 23.67 g sodium acetate (0.288 mol), 86.00 g NaSH (56.99 wt%, 0.874 mol), 129.80 g DCB (0.883 mol), 2.19 g 4-ATP (0.017 mol), and 325 g total NMP, which afforded 88.40 g of a white powdery resin having a 1270ER of 298 g · (10 min)⁻¹ and an M_{w} of 21,400 g/mol. Tm = 285 °C. Tg = 94 °C.

PAS block (co)polymer synthesis: In a DSM Xplore 15 cc twin-screw microcompounder, 12 g of PAS (co)polymer was mixed with 349 mg BPDA for 10 minutes with a screw speed of 100 rpm and a barrel temperature of 335 °C. The resulting yellow-brown extrudate had a 1270ER of 45.0 g · (10 min)⁻¹ and an M_{w} of 32,800 g/mol. Tm = 278 °C. Tg = 98 °C.

### Inventive Example 3: (with 10 mol% of 4-ATP)

PAS (co)polymer synthesis: It was synthesized according to procedure from Inventive Example 1 with 37.97 g sodium hydroxide (0.949 mol), 22.95 g sodium acetate (0.280 mol), 83.38 gNaSH (56.99 wt%, 0.848 mol), 130.83 g DCB (0.890 mol), 10.61 g 4-ATP (0.085 mol), and 315 g total NMP, which afforded 100.52 g of a white powdery resin, having a 1270ER of greater than 8,000 g · (10 min)⁻¹ (the maximum measurable value) and an M_{w} of 6,000 g/mol. Tm = 279 °C. Tg was not detectable by DSC.

PAS block (co)polymer synthesis: In a DSM Xplore 15 cc twin-screw microcompounder, 12 g of PAS (co)polymer was mixed with 1.637 g BPDA for 10 minutes with a screw speed of 100 rpm and a barrel temperature of 335 °C. The resulting yellow-brown extrudate had a 1270ER of 63.9 g · (10 min)⁻¹ and an M_{w} of 25,400 g/mol. Tm = 260 °C. Tg = 125 °C.

### Comparative Example 1: (with 2 mol% 4-ATP; via quench recovery of particles >125 µm)

PAS (co)polymer synthesis: A 1-L autoclave reactor was charged with 35.38 g sodium hydroxide (0.885 mol), 23.03 g sodium acetate (0.281 mol), 83.68 g NaSH (56.99 wt%, 0.851 mol), and 236 g NMP. The reactor was purged and pressurized to 10 psig with nitrogen and set to stir continuously at 400 rpm. A separate addition vessel was charged with 126.29 g DCB (0.859 mol), 2.13 g 4-ATP (0.017 mol), and 50 g NMP. The additional vessel was purged and pressurized to 90 psig with nitrogen, and heated to 100 °C. The reactor was heated from room temperature at 1.5 °C/min. Upon reaching 150 °C, the reactor was vented through a condenser and about 50 mL of a clear condensate was collected under a small stream of nitrogen (60 mL/min) until the reactor reached 200 °C. At this point, the condenser was removed, the nitrogen flow was stopped, and the DCB/4-ATP/NMP mixture in the addition vessel was promptly added to the reactor. The addition vessel was charged with an additional 30 g NMP, purged and pressurized to 90 psig with nitrogen, and the contents were immediately added to the reactor. The sealed reactor continued heating to 240 °C and was then held at 240 °C for 2 hours, heated to 265 °C at 1.5 °C/min, and held at 265 °C for 2 hours. Immediately after this 2 hour period, 20.2 g water and 10.8 g NMP in a 100 mL vessel under 250 psig nitrogen were added to the reactor. The reactor was cooled to 200 °C at 1.0 °C/min and then allowed to cool to room temperature. The resulting slurry was diluted with 200 mL NMP, removed from the reactor, heated to 80 °C, and screened on a No. 120 sieve. The solids were washed once with 100 mL warm NMP (60 °C) and screened again on the No. 120 sieve. Then, the solids were stirred for 15 minutes in 300 mL heated DI water (70 °C) and filtered on the No. 120 sieve, a process that was repeated five times in total. The rinsed solids are dried in a vacuum oven overnight at 100 °C under nitrogen, affording 73.90 g of a white granular resin having a 1270ER of 231 g · (10 min)⁻¹ and an M_{w} of 22,600 g/mol. Tm = 285 °C. Tg = 98 °C.

PAS block (co)polymer synthesis: In a DSM Xplore 15 cc twin-screw microcompounder, 12 g of resin was mixed with 368 mg BPDA for 10 minutes with a screw speed of 100 rpm and a barrel temperature of 335 °C. The resulting yellow-brown extrudate had a 1270ER of 28.5 g · (10 min)⁻¹ and an Mw of 36,000 g/mol. Tm = 277 °C. Tg = 90 °C.

### Comparative Example 2: (2 mol% 4-ATP; PAS block (co)polymer synthesized in solution)

PAS (co)polymer synthesis: It was synthesized according to the same procedure of Comparative Example 1 with 41.48 g sodium hydroxide (1.037 mol), 27.00 g sodium acetate (0.329 mol), 98.02 g NaSH (57.04 wt%, 0.997 mol), 148.07 g DCB (1.007 mol), 2.50 g 4-ATP (0.020 mol), and 371 g total NMP, which afforded 102.43 g of a white powdery resin having a 1270ER of 277 g · (10 min)⁻¹ and an M_{w} of 22,500 g/mol. Tm = 286 °C. Tg = 100 °C.

PAS block (co)polymer synthesis: A 1-L autoclave reactor was charged with 30 g resin, 790 mg BPDA, and 300 g NMP. While stirring at 400 rpm, the mixture was heated to 260 °C at 1.5 °C/min, held at 260 °C for 10 minutes, and allowed to cool to room temperature. The reactor slurry was diluted with 300 mL heated DI water (70 °C) and filtered on a medium porosity sintered glass filter. The solids were rinsed with 300 mL heated DI water (70 °C) and filtered on the sintered glass filter an additional four times, affording a fine yellow powdery resin with a 1270ER of 89.3 g · (10 min)⁻¹ and an M_{w} of 29,800 g/mol. Tm = 280 °C. Tg = 104 °C.

### Comparative Example 3: (2 mol% 1,4-CNB; PAS block (co)polymer synthesized in solution)

PAS (co)polymer synthesis: A 1-L autoclave reactor was charged with 35.28 g sodium hydroxide (0.882 mol), 23.41 g sodium acetate (0.285 mol), 85.06 g NaSH (56.99 wt%, 0.865 mol), 2.72 g 1-chloro-4-nitrobenzene (0.017 mol), and 241 g NMP. The reactor was purged and pressurized to 10 psig with nitrogen and set to stir continuously at 400 rpm. A separate addition vessel was charged with 125.83 g DCB (0.856 mol) and 50 g NMP. The addition vessel was purged and pressurized to 90 psig with nitrogen, and heated to 100 °C. The reactor was heated from room temperature at 1.5 °C/min. Upon reaching 150 °C, the reactor was vented through a condenser and ∼50 mL of a clear condensate was collected under a small stream of nitrogen (60 mL/min) until the reactor reached 200 °C. At this point, the condenser was removed, the nitrogen flow was stopped, and the DCB/NMP mixture in the addition vessel was promptly added to the reactor. The addition vessel was charged with an additional 30 g NMP, purged and pressurized to 90 psig with nitrogen, and the contents were immediately added to the reactor. The sealed reactor continued heating to 240 °C and was then held at 240 °C for 2 hours, heated to 265 °C at 1.5 °C/min, held at 265 °C for 2 hours, cooled to 200 °C at 1.0 °C/min, and finally allowed to cool to room temperature. The resulting slurry was diluted with 200 mL NMP, removed from the reactor, heated to 80 °C, and filtered through a medium porosity sintered glass filter. The filter cake was washed once with 100 mL warm NMP (60 °C). The solids were stirred for 15 minutes in 300 mL heated DI water (70 °C) and subjected to filtration on the medium porosity glass filter, a process that was repeated five times in total. The rinsed solids were dried in a vacuum oven overnight at 100 °C under nitrogen, affording 83.70 g of a white powdery resin having a 1270ER of 445 g · (10 min)⁻¹ and an M_{w} of 19,500 g/mol. Tm = 285 °C. Tg = 95 °C.

PAS block (co)polymer synthesis: In a DSM Xplore 15 cc twin-screw microcompounder, 12 g of resin was mixed with 365 mg BPDA for 10 minutes with a screw speed of 100 rpm and a barrel temperature of 335 °C. The resulting yellow-brown extrudate had a 1270ER of 135.9 g · (10 min)⁻¹ and an M_{w} of 25,600 g/mol. Tm = 279 °C. Tg = 97 °C.

**TABLE 1**

| | **Amine-terminated PAS (co)polymer** | | | | **PAS block (co)polymer with BPDA** | | |
|---|---|---|---|---|---|---|---|
| **Inventive Example** | **additive** | **1270ER** (g · (10 min)⁻¹) | ***M_{w}*** (g/mol) | ***Tₘ*** (°C) | **1270ER** (g · (10 min)⁻¹) | ***M_{w}*** (g/mol) | ***Tₘ*** (°C) |
| Inventive Example 1 | 1 mol% 4-ATP | 72.6 | 31,400 | 285 | 33.3 | 37,300 | 279 |
| Inventive Example 2 | 2 mol% 4-ATP | 298 | 21,400 | 285 | 45.0 | 32,800 | 278 |
| Inventive Example 3 | 10 mol% 4-ATP | >8,000 | 6,000 | 280 | 63.9 | 25,400 | 260 |

**TABLE 2**

| | | **Amine-terminated PAS (co)polymer** | | | | **PAS block (co)polymer with BPDA** | | |
|---|---|---|---|---|---|---|---|---|
| **Comparative Example** | **Modification in comparison with Inventive Examples** | **additive** | **1270ER** (g · (10 min)⁻¹) | ***M_{w}*** (g/mol) | ***Tₘ*** (°C) | **1270ER** (g · (10 min)⁻¹) | ***M_{w}*** (g/mol) | ***Tₘ*** (°C) |
| Comparative Example 1 | 'quench' recovery | 2 mol% 4-ATP | 231 | 22,600 | 285 | 28.5 | 36,000 | 277 |
| Comparative Example 2 | reaction with BPDA performed in NMP solvent instead of reactuve extrusion | 2 mol% 4-ATP | 277 | 22,500 | 286 | 89.3 | 29,800 | 280 |
| Comparative Example 3 | 1,4-CNB used instead of 4-ATP | 2 mol% 1,4-CNB | 445 | 19,500 | 285 | 136 | 25,600 | 279 |

As shown in the above Table 1, the present inventors demonstrated the synthesis of amine-terminated PAS (co)polymer by using 1 mol%, 2 mol% and 10 mol% of 4-ATP as a chain terminator respectively in the Inventive Examples 1-3. Because 4-ATP acted as a chain terminator, the molecular weight of the resulting amine-terminated PAS (co)polymer decreased with increasing 4-ATP content. It was extremely difficult to confirm the presence of the amine end groups or to quantify them, because the amine N-H stretch couldn't be observed by FTIR, titration or NMR analysis was not possible due to the low solubility of the PAS (co)polymer, and CHN analysis was not accurate due to the presence of residual NMP and NMP-derived end groups.

The present inventors subjected the PAS (co)polymer to reactive extrusion with BPDA to confirm and quantify the presence of amine end groups. Accordingly, in the Inventive Examples 1-3, successful chain extensions were observed, which provided strong evidence for the presence of amine end groups. Moreover, the resulting extrudates were in bright yellow, which clearly indicated the formation of imide bond. In particular, the imide bond was obserived directly by FTIR-ATR.

In the Inventive Example 1, the reactive extrusion with stoichiometric BPDA increased the M_{w} of the PAS block (co)polymer by about 1.2 times. The M_{w} increased by about 1.5 times in the Inventive Example 2 and by 4.2 times in the Inventive Example 3. This implies that the ratio of amine end groups to other end groups (e.g., chloro, phenolate, etc.) increase with increasing 4-ATP content, which leads to a more efficient copolymerization with BPDA. Notably, in the Inventive Exmple 3, the T_{g} increased up to 125 °C, which is remarkably high for PPS.

In the Inventive Examples 1-3, the PAS (co)polymers were isolated by vacuum filtration of the post-reactor slurry, which is a bit far from a commercial procedure.

Instead, these PAS (co)polymers would most likely be isolated via the 'flash' process in which the NMP is removed under vacuum at 200 - 280 °C, and the resulting salt/polymer mixture is rinsed with water to remove salts. However, in some circumstances, it may be desirable to isolate the polymer using the "quench" procedure in which the reactor is cooled gradually, usually following the addition of water, to afford granules that can be isolated on screens. The Comparative Examples 1-3 in the above Table 1 correspond to the resulting amine-terminated PAS (co)polymers and PAS block (co)polymer with BPDA.

In the Comparative Example 1, we demonstrated that the 2 mol% of 4-ATP resin could be isolated on a No. 120 sieve in 78% of theoretical yield using an aqueous quench procedure.

In the Comparative Example 2, we synthesized amine-terminated resin with 2 mol% 4-ATP using the same procedure as the Inventive Example 2. However, instead of using reactive extrusion to form the PAS block (co)polymer with BPDA, we reacted the PAS (co)polymer with BPDA in NMP solvent at 260 °C in a pressure reactor. This afforded a fine powder that could be analyzed by FTIR-ATR and was found to display a new imide absorption peak at 1720 cm⁻¹, which further supported that a block (co)polymer containing an imide bond was formed. However, in comparison with the reactive extrusion, this solution procedure was less efficient and the Mw only increased by 1.3 times (vs. the 1.5 times increase in Inventive Example 2), though this procedure could be more useful for some other applications.

In the Comparative Example 3, 1-chloro-4-nitrobenzene (1,4-CNB) was used instead of 4-ATP, because 4-ATP can be formed in situ in NMP from the reaction of 1-chloro-4-nitrobenzene (1,4-CNB) with NaSH (*see* CN103539712B and also Journal of the American Chemical Society, 1949, vol. 71, p. 1747) and 1,4-CNB is much cheaper than 4-ATP. In the Comparative Example 3, we used 2 mol% of 1,4-CNB instead of 4-ATP. When extruded with BPDA, the Mw only increased by 1.3 times (*vs*. the 1.5 times increase in Inventive Example 2), suggesting that the 1,4-CNB was not fully converted to 4-ATP. The CN103539712B patent teaches that some 4-chloroaniline forms as a byproduct.

## Claims

1. A process for manufacturing a poly(arylene sulfide) (PAS) (co)polymer containing at least one amine as one terminal group by mixing (i) at least one dihalogenated aromatic compound, (ii) at least one alkali metal (hydro)sulfide, and (iii) a chain terminator that contains an aromatic thiol with an aniline group, or that forms an aromatic thiol with an aniline group under polymerization,
wherein the PAS (co)polymer comprises at least one arylene sulfide as recurring units p, q and r represented by the following formulae (I), (II) and (III) respectively: 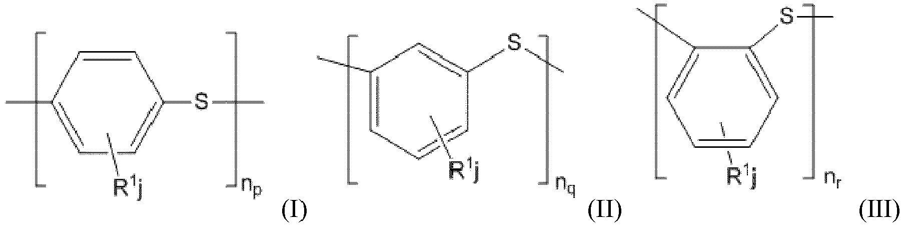
wherein nₚ, n_{q} and nᵣ are the mole % of each recurring unit p, q and r, respectively;
the recurring units p, q and r are arranged in blocks, in alternation or randomly;
1% ≤ (n_{q} + nᵣ)/(nₚ + n_{q} + nᵣ) ≤ 12%;
n_{q} ≥ 0% and nᵣ ≥ 0%;
j is zero or an integer between 1 and 4; and
R¹ is selected from the group consisting of halogen atoms, C₁-C₁₂ alkyl groups, C₇-C₂₄ alkylaryl groups, C₇-C₂₄ aralkyl groups, C₆-C₂₄ arylene groups, C₁-C₁₂ alkoxy groups and C₆-C₁₈ aryloxy groups.

2. The process for manufacturing a PAS (co)polymer according to claim 1, wherein the process comprises an additional step of extruding or reacting the PAS (co)polymer with (iv) an aromatic compound represented by the following formula (IV) 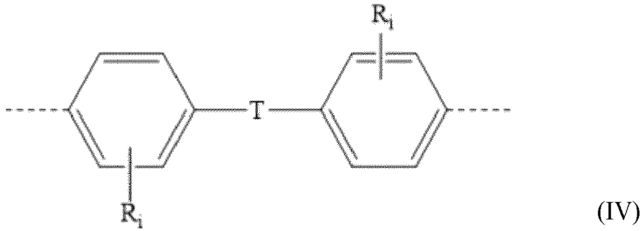 wherein T is selected from the group consisting of a bond, -C(O)-, -SO₂-, -O-, - C(CH₃)₂-, phenyl and -CH₂-; and Rᵢ is an acid anhydride group.

3. The process for manufacturing a PAS (co)polymer according to claim 1 or 2, wherein (i) at least one dihalogenated aromatic compound comprises dihalogenated bezenes and dihalogenated aromatic compounds having a substituent other than halogen.

4. The process for manufacturing a PAS (co)polymer according to claim 3, wherein the dihalogenated benzenes comprise p-dichlorobenzene, o-dichlorobenzene, m-dichlorobenzene, p-dibromobenzene, o-dibromobenzene, m-dibromobenzene, 1-bromo-4-chlorobenzne, 1-bromo-3-chlorobenzene, 1-bromo-2-chlorobenzene, and mixtures thereof.

5. The process for manufacturing a PAS (co)polymer according to claim 3, wherein the dihalogenated aromatic compounds having a substituent other than halogen comprise 1-methoxy-2,5-dichlorobenzene, 1-methyl-2,5-dichlorobenzene, 1,4-dimethyl-2,5-dichlorobenzene, 1,3-dimethyl-2,5-dichlorobenzene, 2,5-dichlorobenzoic acid, 3,5-dichlorobenzoic acid, 2,5-dichloroaniline, 3,5-dichloroaniline, and mixtures thereof.

6. The process for manufacturing a PAS (co)polymer according to any of claims 1 to 5, wherein (ii) the alkali metal (hydro)sulfide comprises lithium hydrosulfide, sodium hydrosulfide, potassium hydrosulfide, lithium sulfide, sodium sulfide, potassium sulfide, rubidium sulfide, cesium sulfide, and mixtures thereof.

7. The process for manufacturing a PAS (co)polymer according to any of claims 1 to 6, wherein (iii) the chain terminator comprises 4-aminothiophenol, 3-aminothiophenol, 2-aminothiophenol, 1-chloro-3-nitrobenzene, 1-chloro-2-nitrobenzene, 1-chloro-4-nitrobenzene, 4-nitrothiophenol, 4-acetamidothiophenol, and mixtures thereof.

8. The process for manufacturing a PAS (co)polymer according to claim 7, wherein (iii) the chain terminator is 4-aminothiophenol.

9. The process for manufacturing a PAS (co)polymer according to any of claims 2 to 8, wherein (iv) the aromatic compound comprises pyromellitic dianhydride, 3,3',4,4'-benzophenonetetracarboxylic dianhydride (BTDA), 3,3',4,4'-biphenyltetracarboxylic dianhydride (BPDA), and mixtures thereof.

10. The process for manufacturing a PAS (co)polymer accordint to any of claims 1 and 3 to 8, wherein the process comprises an additional step of extruding or reacting the PAS (co)polymer with another polymer resin bearing reactive functional groups such as an epoxy, a polyamide, a polyester, a polyimide, a polyamideimide, or a polyetherimide.

11. A PAS (co)polymer containing at least one amine as one terminal group produced by a process according to any of claims 1 to 10.

12. The PAS (co)polymer containing at least one amine as one terminal group according to claim 11, containing the other terminal group selected from the group consisting of chlorine, phenol, phenolate salt, and alkylamine.

13. A polymer composition comprising the PAS (co)polymer containing at least one amine as one terminal group according to claim 11 or 12 and at least one reinforcing filler comprising glass fibers, carbon fibers and silane compounds.

14. An article, part or composite material comprising the PAS (co)polymer according to claim 11 or 12, or the polymer composition according to claim 13.

15. Use of the PAS (co)poymer according to claim 11 or 12, or the polymer composition according to claim 13 in oil and gas applications, automotive applications, electric and electronic applications, or aerospace and consumer goods as a heat and chemical resistant coating.
